Europäisches Patentamt

European Patent Office

Office européen des brevets

(11) Publication number: 0 399 263
A2

# EUROPEAN PATENT APPLICATION

(21) Application number: 90108432.7

(22) Date of filing: 04.05.90

(51) Int. Cl.⁵: H02G 15/18, H02G 1/14

(30) Priority: 24.05.89 IT 2062089

(43) Date of publication of application:
28.11.90 Bulletin 90/48

(84) Designated Contracting States:
DE ES FR GB

(71) Applicant: SOCIETA' CAVI PIRELLI S.p.A.
Piazzale Cadorna 5
I-20123 Milano(IT)

(72) Inventor: Vallauri, Ubaldo
Via Rovani, 6
Monza (MI)(IT)
Inventor: Portas, Francesco
Via Roma 4
Quattordio (AL)(IT)

(74) Representative: Giannesi, Pier Giovanni et al
Pirelli S.p.A. Direzione Brevetti Piazzale
Cadorna, 5
I-20123 Milano(IT)

(54) Assembly constituted by a sleeve, fitted on a tubular support, in particular for joints and sealing ends of electric cables.

(57) Assembly, particularly for joints and ends of electric cables, constituted by a tubular body (8), formed by a tape element (10) wound as a helix having contiguous coils (9), supporting a radially expanded sleeve (7) fitted thereon, for its positioning, said tape element (10) can be unwound and removed from the inside of the sleeve (7) for undoing the tubular body (8) permitting thus the tightening of the sleeve (7) on the cables (1, 2) by pulling one of the ends (11) of the tape provided, along its whole longitudinal extension, with transversal notches (12) regularly spaced, penetrating in part the thickness of the tape itself, the walls of said notches being maintained in contact to one another in wound position.

Fig. 1

## ASSEMBLY CONSTITUTED BY A SLEEVE, FITTED ON A TUBULAR SUPPORT, IN PARTICULAR FOR JOINTS AND SEALING ENDS OF ELECTRIC CABLES

The present invention refers to a covering assembly comprising a supporting tubular body and an elastically expanded sleeve fitted thereon.

More particularly, reference is made to covering sleeves for electric cable joints and to the relative supporting tubular bodies; however, it is specified that in the present description the term "electric cables" is intended to mean any whatsoever cylindrical body, as tubes, bars, stems and the like, on which an elastically expanded and collapsible covering sleeve is to be applied, for example for the local protection from the corrosion. Moreover, although the present invention makes a detailed reference to the electric cable joints, it is understood that the invention can be applied similarly on the ends of the cables themselves, and moreover also at any point of any whatsoever desired cylindrical body, independently of the presence of joints or discontinuities in its structure.

In order to realize joints in electric cables, the relative conductors are locally stripped of the insulation surrounding them to be electrically connected to each other; the space corresponding to the removed insulation is then filled with suitable means and a sleeve is arranged on the connecting zone.

Said sleeve, whose characteristics are well known in the art, must be fitted on one of the cables, before their connection, and then made slide on the joined cables as far as it is in the correct position on the joint; subsequently the sleeve must be able to tighten closely on the surface of the cable insulations.

To this end the sleeve is supported in radially elastically expanded conditions by a sufficiently rigid tubular element that has an inner diameter greater than the outer diameter of the cables and that can slide freely on them; at the wished moment the tubular element can be then removed, so that the sleeve contracts elastically, tightening on the cables as desired.

The pressure corresponding to the radial expansion of the sleeve is considerable, since the sleeves can be expanded up to 200-300%, in particular if it is wished to use a single measure of sleeve for more than one cable outer diameter, obliging thus the sleeve itself to a particularly greater expansion.

Sleeves of this type are for instance those described in the Italian patent No. 19102A/89 of the same Applicant.

Tubular elements for supporting sleeves are known which can be removed, allowing the sleeve contraction, by means of an axial unthreading as described in the European patent No. 149 032 of the same Applicant; said tubular elements bear easily the outer pressure applied thereto by the sleeve, but they must be unthreaded by means of suitable tools owing to the high friction arising between their outer surface and the inner surface of the sleeve and their use is therefore laborious.

Supporting tubular elements are also known from the English patent No. 1 292 608 which are formed by a tape or the like wound as a helix having contiguous turns; said tubular element can be removed by unwinding the helix through a pulling action exerted on one end of the tape, previously unwound at one extremity of the tubular body, introduced into it and pulled at the opposite extremity.

In said manner the tubular element so formed is eliminated with the least effort from the inside of the sleeve and the relative operations can be carried out manually without particular tools.

However, the known structure is only suitable for supporting sleeves of small thickness, or not very expanded, since it can be realized only starting from tapes having reduced thickness, originating thus tubular bodies having a thin wall, i.e. not sufficient to bear the outer pressure imposed by the sleeves, previously described.

In fact, the use of tapes having a greater thickness, corresponding to the required resistance, is not possible because said tapes would result too rigid for being sufficiently bent to be introduced into the remaining tubular body, in the space available for them between the cables and the tubular element itself, in order to operate the unwinding as described above.

The aim of the present invention is to provide an assembly for sleeves of the above indicated type, comprising a supporting tubular body formed by a tape wound as a helix, sufficiently flexible to be removed by means of an easy manual pulling action at one end of the tape, which has at the same time a structure enabling a sizing with the thicknesses necessary to bear the stresses caused by its use with sleeves of great thickness, subjected to considerable radial expansions and exerting corresponding forces of elastic return.

The object of the present invention is an assembly comprising a supporting tubular body and a covering sleeve, particularly for joints and sealing ends of electric cables, fitted on the tubular body in radially expanded conditions, wherein the tubular body is constituted by a tape wound as a helix having contiguous coils and intended to be removed undoing the winding by pulling one end of the tape element, unwound at one extremity of the tubular body and led inside the body itself as far as the outlet at the opposite extremity, causing thus the elastic contraction of the sleeve and its tightening on both the cable ends connected to each other and coaxially arranged inside the sleeve itself, characterized by the fact that the tape is provided, along its whole longitudinal extension, with substantially transversal notches, regularly spaced, said notches having walls in tight contact to one another in wound position and separable during the unwinding.

According to a preferred embodiment, the notches are positioned on the side of the tape lying, after its helical winding, on one flank of the formed coils looking towards the part opposite to the extremity of the tubular body from which the end of the tape comes out.

In alternative, there are notches alternatively arranged on both the sides of the tape corresponding to the flanks of the coils formed by it in consequence of its helical winding, it being possible to select indifferently the extremity of the tubular body from which the end of the tape, introduced at the opposite extremity of the body itself, is come out.

The notches have such a depth that the residual thickness of the not cut tape is greater than that sufficient for bearing the undoing pull of the helical winding.

The sides of the tape apt to contact, when wound in coils, the flanks of the contiguous coils are shaped according to complementary surfaces.

Said complementary surface are shaped in such a manner that at least one part of the side of the tape provided with notches is outside a corresponding part of the opposite side, devoid of notches; according to a particular embodiment, the complementary surface are the one convex and the other concave, respectively.

In a different embodiment of the invention, the notches are provided on the side of the tape originating, after the helical winding, the inner surface of the tubular element.

In said embodiment the notches of the tape can have a profile shaped substantially as a V, open towards the surface in which the notches have been made, with the opening angle between the walls of the notch of an amplitude smaller than that corresponding to the contact between the walls themselves with the tape helically wound.

In each one of the described embodiments the pitch between two consecutive notches, or between two consecutive notches obtained on the same surface of the tape, is lower than that corresponding to eight notches for each coil preferably the thickness between two consecutive notches is comprised between 0.5 and 2 times the thickness of the tape.

The width of the tape, i.e. the pitch of one coil when it is wound to form the tubular element, is lower than 3 times the thickness of the tape and preferably is comprised between 0.5 an 1.5 times the thickness itself.

According to further embodiments, the notches can be made on parallel planes, orthogonal to the longitudinal extension of the tape and penetrate into the tape itself in oblique direction with respect to one of its surfaces; in alternative the notches can be placed on oblique planes with respect to the longitudinal extension of the tape.

According to a preferred embodiment, notches arranged on planes with different lying and/or penetrating the tape according to different inclinations with respect to its surfaces are present contemporaneously in pre-ordained sequences.

Further details could be obtained from the following description made with reference to the attached sheets of drawings in which:

FIGURE 1 shows in a axial section the zone of connection between two cables, provided with a sleeve and relative supporting tubular body, according to a first embodiment, during the application;

FIGURE 2 shows the section according to line II-II of figure 1;

FIGURE 3 shows in perspective view the supporting body of the sleeve, during the unwiding step, the cables and the sleeve being removed for a better graphic evidence;

FIGURES 4, 5, 6 show three alternative embodiments of the section of the tape forming the tubular body;

FIGURE 7 is a perspective view of the assembly of a sleeve fitted on the supporting tubular body according to a further embodiment of the invention;

FIGURE 8 is a lateral view of the tape of figure 7;

FIGURE 9 shows the zone of connection of two cables with the sleeve supporting tubular body according to an alternative embodiment;

FIGURE 10 shows the section accordingto line X-X of figure 9:

FIGURE 11 shows the profile of the tape forming the tubular body, in the embodiment of figures 9 and 10, when unwound in rectilinear configuration.

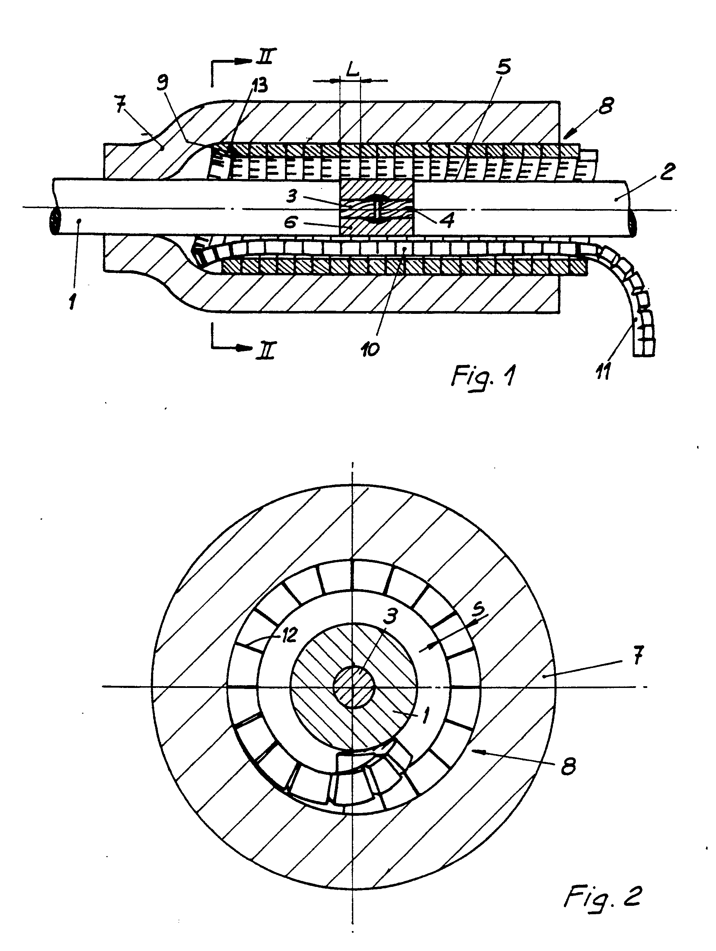

As schematically shown in figure 1, two cable lengths 1, 2 of which it is wished to realize their connection, are arranged coaxially face to face, with relative conductor stripped end portions 3, 4, namely locally devoid of the insulation surrounding the same, in order to carry out their electric connection.

Said electric connection is carried our with known means, as welding, clamps and the like, and therefore a more detailed description is not made.

The space corresponding to the portion of insulation that has been removed is then filled with a filler 6, of known type too.

Moreover, at the connection area there is arranged a sleeve 7, supported by a tubular body 8, in condition of high expansion, i.e. such as to bring the sleeve to an inner diameter sufficient for being slidingly fitted on one of the cable lengths to be connected, before the joining operation, to be then led onto the connection itself and tightened.

As known, on the removal of the tubular body 8, the sleeve 7 can elastically contract, tightening on the insulating covering 5 of the conductors.

In order to be able to use the same sleeve for groups of cables of different diameter the sleeve itself is realized with elastic characteristics and diameter, when in rest position, that permit its tightening on the insulation of the smallest cable of the group of cables for which it is foreseen and is expanded, on the tubular body 8, as far as a diameter that permits its insertion on the greatest of the cables of the group itself; this corresponds to expansion values comprised between 200 and 300% and is associated to a relative radial stress on the tubular body 8, corresponding to pressures up to 1MPa or higher.

In order to permit an easy removal of the tubular body 8 after the completion of the joining of the conductors and the application of the sleeve itself in the desired position on the connection, the tubular body 8 is constituted by a plurality of coils 9 formed by a tape 10 of plastic material or the like, wound as a helix, the coils 9 being adjacent to each other and bound in a separable manner.

The bond among the coils can be carried out by means of known techniques, as spot welding, glueing, mutual engagement of complementary profiles and so on, suitable to permit the tearing of the bond itself through a manual pull effected on one end 11, inserted through the free space left for it between the tubular body 8 and the outer surface of the insulation of the cables 1 and 2. In said way the tubular body unwinds in the shape of a tape and moves aways from the inside of the sleeve which can therefore elastically tighten on the cables as wished.

To bear the outer pressure given by the radial expansion imposed to the sleeve, as indicated above, it is necessary that the tubular body 8 has a sufficiently great wall thickness S to prevent its collapse in consequence of the outer pressure; however, the corresponding thickness could bring the tape 10, if at constant section, to a very high bending stiffness that would impede the easy unwinding into rectilinear or substantially rectilinear shape, in the space available between the residual body 8, not yet unwound, and the cables 1 and 2 connected together.

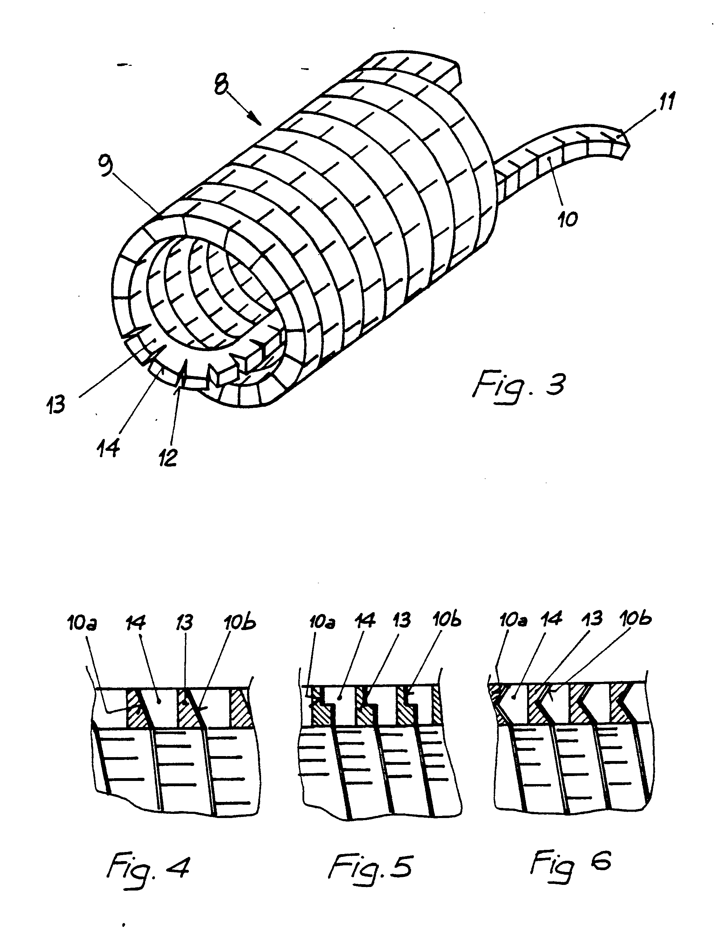

Since the requirements of resisting to the outer pressure and of flexibility are in contrast with each other, the tape 10, whose turns form, as said, the tubular body 8, is provided, as better shown in the figures 2 and 3, with the transversal notches 12 which make it possible that the section of tape resistant to bending, in the direction tending to open the notches 12, is considerably smaller than the section of the entire tape, which instead reacts wholly to the outer pressure, giving to the tape itself the wished degree of flexibility without impairing its resistance.

In particular, in the embodiment shown in the figures from 1 to 6, the notches 12 are made on the lateral face of the tape, destined to come into contact with the opposite face of the successive coil in wound configuration and looking the opposite extremity with respect to the extremity of the tubular body from which the tape end 11 comes out.

In this way, as shown in figure 3, the tape 10 bends, for inserting in the part of tubular body not yet unwound, maintaining the side provided with notches outside the formed curve, so that said notches can open, making easy the bending of the tape itself.

In fact, the bending of the tape in said direction is borne, at the notches, only by the tape portion 13 lying behind in the direction of the bending itself, which has a moment of inertia, for the bending in said plane, considerably lower than that in the opposite plane, the value of said moment of inertia can be chosen according to the need varying the depth of the notches 12.

Therefore the tape can be easily bent in a plane substantially tangent to the surface of the cables 1, 2 and then be inserted in the space between them and the tubular body without suffering considerable torsions, and requiring consequently a free space between the cables and the tubular body slightly greater than the thickness 5 of the tape.

This is particularly advantageous because permits to keep low the expansion imposed to the sleeve, reducing consequently all the problem connected thereto.

The depth of the notches 12, which is convenient to be high for ensuring a high flexibility, has as limitation a value that leaves a section in the zone 13 large enough to withstand the tensile stresses required by the unwinding of the tape.

In order to avoid that the tape portions comprised between two notches can be bend inside the tubular body, under the effect of the outer pressure applied by the sleeve 7, causing undesirable discontinuities on the outer surface of the tubular body itself, the sides 10a and lob of the tape apt to go into mutual contact in winding position can be oblique, as illustrated in figure 4, which shows a portion of tubular body, sectioned at the notches of the tape 10 forming this latter, so that the portion 14 comprised between two notches leans against the side equally inclined of the portion 13 lying behind the notches, which withstands the bending.

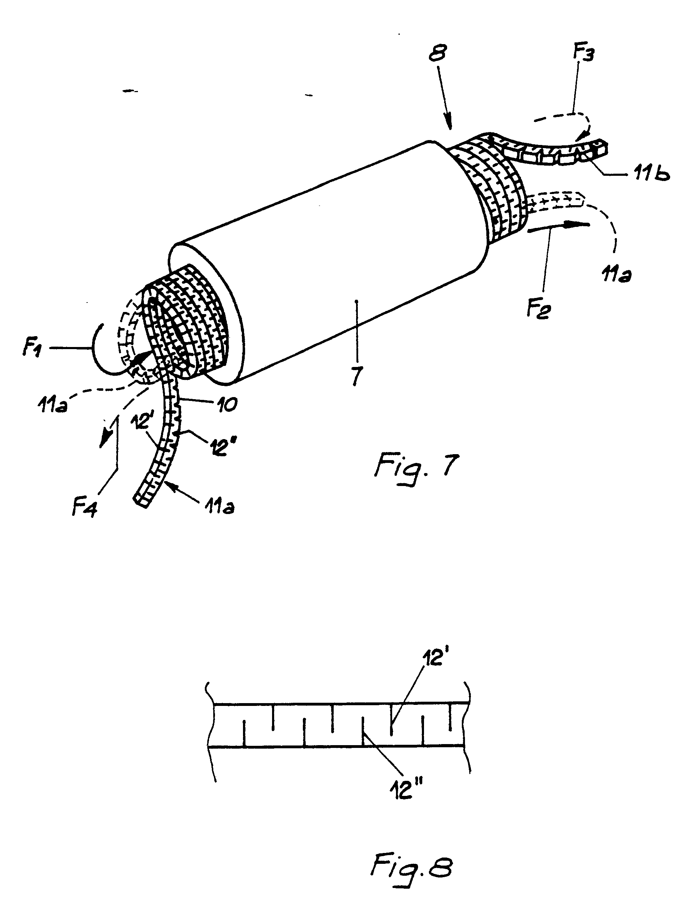

In alternative, as shown in figure 5, the sides 10a, 10b of the tape can be shaped in such a way as to form corresponding steps, or also, as shown in figure 6, it is possible to provide a symmetrical shaping of the sides 10a, 10b, for instance in the form of a V, so that the portion 14 comprised between two successive notches is guided bilaterally by the portion 13 lying behind the notches, ensuring thus the complete continuity of the outer surface of the tubular body and avoiding that unevenesses of the same originate printings more or less permanent on the inner surface of the sleeve 7.

The faces of the notches 12 are made to be in contact to one another when the tape is in rectilinear configuration or is helically wound, therefore in the wound configuration the tape acts as a body devoid of discontinuities, both in the continuous zone 13 and in the zone provided with notches.

In fact, the outer pressure produced by the expanded sleeve 7 corresponds to a compression stress in the whole section of the wall of the tubular body 8 and therefore the presence of the notches is not influential for the resistance.

The assembly according to the invention comprising the tubular support and the sleeve fitted thereto, can be put on the market already prepared, i.e. with the tape partially unwound at one extremity of the tubular support and inserted into this latter, as far as to come out of the opposite part with its end, through which the pull for unwinding the turns of the support is exerted as previously illustrated.

In the case in which, on the contrary, the assembly is provided with the integral tubular support, i.e. not previously unwound in part and prearranged as described, in order to avoid that a user can being to unwind the tape at the extremity opposite to that foreseen, bending thus the tape in a direction tending to close the notches and making inefficacious the presence of the same, an alternative embodiment of the invention suggests, as shown in figures 7 and 8, to provide the tape 10 with notches 12$'$ and 12$''$ alternating on one and on the other of the lateral surfaces of the turns formed by said tape.

In laid way, as shown in figure 8, the user can indifferently begin to unwind the end 11a or 11b of the tape for a certain portion, proceeding consequently to insert the unwound part into the residual tubular support to pull it out at the opposite extremity; for instance it is possible to unwind the end 11a and to insert it into the tubular support according to the arrow F$_1$, as shown with dashed line, and to pull it out at the opposite extremity of the tubular support, by means of a pulling action according to the arrow F$_2$.

During said operation the notches 12$'$, stressed to become wider, facilitate the bending of the tape, while the notches 12$''$ remain closed and their presence is not influential.

Likewise, it is possible to unwind the end 11b of the tape, inserting it into the tubular support and pulling it out at the opposite extremity of the same according to the dashed arrows F$_3$, F$_4$ with the aid of the notches 12$''$.

In such a way, whatever the choice made by the user is, the tubular support could be removed in the same easy manner.

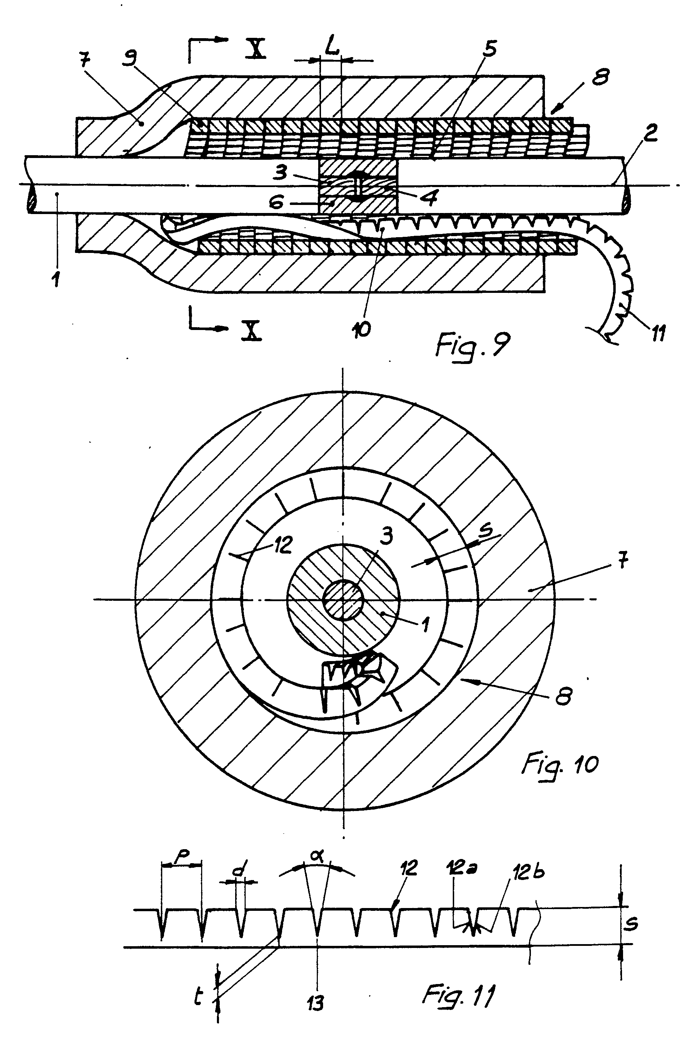

In a further alternative embodiment, as shown by the figures 9 and 10, the notches 12 of the tape 10 can be made on the side of the tape intended to constitute, after the winding, the inner surface of the tubular body 8 formed by said tape.

In this case, said notches can have the faces 12a, 12b forming a dihedron when the tape is arranged in rectilinear configuration, which come then into contact each other when the tape is helically bent, with the notches looking inwardly to form the coils 9, that are further tightened one against the other in consequence of the outer pressure applied by the sleeve 7.

In this condition, as in the preceding cases, the behaviour of the so formed tubular body 8, under the effect of the outer pressure, is substantially equivalent to that given by a body devoid of the notches 12; viceversa, in presence of a pull along the tape 10 intending to bring it to the rectilinear configuration, undoing the tubular body, the faces 12a, 12b of the notches move away from each other and the flexural resistance and the torsional resistance of the tape are supplied only by the thickness t of the section 13 of the tape itself lying below the notch, permitting thus to obtain a very great deformability, answering the requirements.

To ensure the contact between the walls 12a, 12b once the tape is helically wound, the opening angle a of the notches 12 when the tape is in rectilinear position, shown in figure 9, must be such as to give an opening value d of each notch equal to:

$$d < \frac{2 \pi S}{n},$$

where S is the thickness of the tape, and consequently of
the wall of the tubular body 8, and
n is the number of notches present in one coil so as to guarantee a tightly closed contact between the faces 12a, 12b and a bending as much as possible continuous to the tape when it is wound to form the tubular body 8.

In this embodiment, during the unthreading in the space comprised between the tubular body 8 and the cables 1, 2 the tape 10 suffers, particularly near the zone of its separation from the body 8, a torsion that causes it to arrange in transversal direction in said space, as schematically shown in the figures 9 and 10; therefore in this case it is necessary to provide a free space between the body 8 and the greater one of the cables for which the sleeve is realized, that permits said torsion, said space being equal or greater than the diagonal of the tape section.

In all the described embodiments, the pitch p between two consecutive notches, or between two consecutive notches made on the same surface, has to be such as to form at least eight notches for each coil but preferably a higher number of notches; in a preferred embodiment the pitch p is comprised between 0,5 and 2 times the thickness S.

The width L of the tape i.e. the pitch of one coil is chosen not higher than 3 times the thickness of the tape and is comprised, preferably, between 0.5 and 1.5 times the thickness S.

The greater values of said width can be used for tapes having notches according to the embodiments of figure 1 or 7, while with notches according to figure 9, since torsions can occur during the unwinding, it is preferred that the width values are lower.

By way of example, a tubular body having the outer radius r = 25 mm suitable for withstanding an outer pressure up to 0.7 MPa, can be realized starting from a tape of polypropylene having a modulus of elasticity E = 1500 MPa, a thickness 5 = 3 mm and a width L = 3 mm; the pitch between the notches can be chosen, in both the above described embodiments of notches, equal to p = 5 mm, owing to the relative flexibility of the used material.

The indicated pressure value for example can correspond to a sleeve of the type described in the Italian patent application No. 19102 A/89, already cited, with inner diameter, in rest position, equal to 17 mm and wall thickness, in the same conditions, of 15 mm, expanded up to an inner diameter of 51 mm, i.e. of 200X.

In order to withstand higher pressures, for example 0.9 MPa, corresponding to more rigid sleeves and having a greater thickness of subjected to stronger expansions, it is possible to use, for instance, a tape of polyammide resin, with modulus of elasticity E = 3000 MPa, with the same thickness and width as the preceding example, with an outer radius r = 34 mm when wound; owing to the greater rigidity of the material, in this case it is preferred a pitch between the notches p = 3 mm.

For example, this second case can be relating to a sleeve of the same type as that described in the previous case, with inner diameter in rest position of 17 mm and thickness of 15 mm, expanded up to an inner diameter of 68 mm, i.e. of 300%.

For some embodiments, for instance in case of particularly rigid tapes, it is possible to provide notches in both the directions described above, i.e. both on the inner surface and on the flank of each turn, or also notches engraving the tape in the plane transversal to its greater direction, with oblique direction with respect to its faces, or also in an oblique plane with respect to the longitudinal extension of the tape.

In addition to the above, many other alternative embodiments can be provided, without falling out of the general concept of the present invention.

## Claims

1. Assembly comprising a supporting tubular body (8) and a covering sleeve (7), particularly for joints and sealing ends of electric cables (1, 2) fitted on the tubular body in radially expanded conditions, wherein the tubular body (8) is formed by a tape (10) wound as a helix having contiguous coils (9) and intended to be removed undoing the winding by pulling one end (11) of the tape, unwound at one extremity of the tubular body and led inside the body itself as far as the outlet, at the opposite extremity, causing thus the elastic contraction of the sleeve (7) and its tightening on both the cable ends connected to each other and coaxially arranged inside the sleeve itself, characterized by the fact that the tape (10) is provided along its whole longitudinal extension with substantially transversal notches (12), regularly spaced, said notches having walls in tight contact to one another in wound position and separable during the unwinding.

2. Assembly according to claim 1, characterized by the fact that the notches (12) are positioned on the side of the tape lying, after its helical winding, on one flank of the formed coils, looking towards the part opposite to the extremity of the tubular body from which the end (11) of the tape comes out.

3. Assembly according to claim 2, characterized by the fact that notches (12', 12") are alternatively disposed on both sides of the tape (10) corresponding to the flanks of the coils (9) formed by this latter in consequence of its helical winding, it being possible to select indifferently the extremity of the tubular body from which the end (11a, 11b) of the tape, introduced at the opposite extremity of the body itself is come out.

4. Assembly according to claim 1, characterized by the fact that the notches (12) have such a depth that the tape has a not cut residual thickness (13) which is greater than that sufficient for bearing the pulling action for undoing the helical winding.

5. Assembly according to claim 2, characterized by the fact that the sides (10a, 10b) of the tape destined to the contact with the flanks of the contiguous coils when wound in coils, are shaped according to complementary surfaces.

6. Assembly according to claim 5, characterized by the fact that the complementary surfaces are shaped in such a way that at least a part of the side (10b) of the tape provided with notches is outside a corresponding part of the opposite side (10a) devoid of notches.

7. Tubular body according to claim 5, characterized by the fact that the complementary surfaces are the one convex and the other concave, respectively,

8. Assembly according to claim 1, characterized by the fact that the notches (12) are provided on the side of the tape originating, after the helical winding, the inner surface of the tubular element (8).

9. Assembly according to claim 8, characterized by the fact that the notches (12) of the tape have a substantially V shaped profile, open towards the surface where the notches themselves have been made, with an angle of opening between the walls of the notch of an amplitude smaller than that corresponding to the contact between the walls themselves with the tape (10) helically wound.

10. Assembly accordingly to claim 2 or 8, characterized by the fact that the pitch between two consecutive notches is lower than that corresponding to eight notches for each coil.

11. Assembly according to claim 3, characterized by the fact that the pitch between two consecutive notches (12) made on the same surface of the tape (10), is lower than that corresponding to eight notches for each coil.

12. Assembly according to claim 10 or 11, characterized by the fact that the pitch between two consecutive notches (12) is comprised between 0.5 and 2 times the thickness of the tape.

13. Assembly according to claim 8, characterized by the fact that the width L of the tape (10), namely the pitch of one coil (9) when said tape is wound to form the tubular element (8), is lower than 3 times the thickness of the tape (10) and preferably comprised between 0.5 and 1.5 times the thickness itself.

14. Assembly according to claim 1, characterized by the fact that the notches (12) are made on parallel planes, orthogonal to the longitudinal extension of the tape, and penetrate the tape (10) in oblique direction with respect to one of its surfaces.

15. Assembly according to claim 1, characterized by the fact that the notches (12) lie on oblique planes with respect to the longitudinal extension of the tape (10).

16. Assembly according to claim 1, characterized by the fact that the notches arranged on planes with different lying and/or penetrating the tape according to different inclinations with respect to its surfaces are contemporaneously present in preordained sequences.

17. Supporting tubular body for sleeves, characterized by the fact of being constituted as foreseen for the assembly according to one or more of the preceding claims.

EP 0 399 263 A2

Fig. 1

Fig. 2

Fig. 3

Fig. 4

Fig. 5

Fig 6

Fig. 7

Fig. 8

EP 0 399 263 A2

Fig. 9

Fig. 10

Fig. 11